# EUROPEAN PATENT SPECIFICATION

(11) **EP 3 964 538 B1**
(45) Date of publication and mention of the grant of the patent: **30.10.2024**
(21) Application number: 20825531.5
(22) Date of filing: 23.03.2020
(51) Int. Cl.: C08G 65/28, C08G 65/30, C08G 65/26

(54) **PROCESS AND SYSTEM FOR PRODUCING LOW-ODOR POLYETHER POLYOL**
VERFAHREN UND SYSTEM ZUR HERSTELLUNG VON GERUCHSARMEM POLYETHERPOLYOL
PROCÉDÉ ET SYSTÈME DE PRODUCTION D'UN POLYOL DE POLYÉTHER PEU ODORANT

(30) Priority: 17.06.2019 CN 201910524985
(43) Date of publication of application: 09.03.2022
(73) Proprietor: Jiahua Science&Technology Development (Shanghai ) Ltd., Shanghai 201210 (CN)
(72) Inventor: LI, Zhijun, Shanghai 201210 (CN); WANG, Feng, Shanghai 201210 (CN); LI, Yubo, Shanghai 201210 (CN)
(74) Representative: Eyre, David Edward
(86) International application number: PCT/CN2020/080707
(87) International publication number: WO 2020/253297

(56) References cited:
- EP-A1- 0 623 637
- EP-A1- 3 747 929
- CN-A- 1 242 018
- CN-A- 1 244 137
- CN-A- 102 585 199
- CN-A- 103 384 692
- CN-A- 109 400 867
- CN-A- 109 575 268
- CN-A- 109 575 268
- CN-A- 110 358 070
- CN-U- 204 865 845
- CN-U- 204 865 845
- TW-A- 201 306 936
- US-A- 5 159 092
- US-A- 5 672 768
- US-A1- 2009 326 283

## Description

### TECHNICAL FIELD

The present disclosure relates to the technical field of production of polyether polyols, in particular to a process and system for producing a low-odor polyether polyol.

### BACKGROUD

A polyether polyol is an important constituent part of a polyurethane material, at present, based on continuous improvement of production technologies and devices of many manufacturers, the quality of products is also continuously improved, but the problem that the products are prone to emitting poisonous and harmful smell or gas is not well solved. With increasing attention to the environmental protection problem, consumers are also more and more critical, especially on a soft foam polyether polyol applied to furniture, automobiles, clothes and the like which are directly related to daily life of people, so that the demand of a low-odor polyether polyol grows increasingly.

The odor of a polyether polyol comes from several of the following substances:
1. Allyloxy polyether, which is a by-product of isomerization of propylene oxide at high temperature followed by a rearrangement reaction, wherein the substance has a strong odor.
2. Peroxide, which is produced by reacting a trace amount of oxygen in a production process of an epoxy olefin with oxidized polyether.
3. Aldehyde substance, wherein in a refining process, part of polyether is subjected to a rearrangement reaction and is partially decomposed under an acidic condition to generate the aldehyde substance, and in addition, part of aldehyde also exists in the epoxy olefin.
4. Cyclic ether, in the refining process of polyether, propenyl ether may become cyclic ether in the presence of an acidic medium, and the cyclic ether brings strong odor to polyether polyol, and even if a trace amount of the cyclic ether exists, the cyclic ether brings unpleasant odor to polyether polyol.

Thus it can be seen that toxic and harmful gases are generated and a lot of odors are volatilized no matter in the polyether polyol production process or in the refining process, however, many manufacturers only focus on odor removal in the refining process, although a certain effect is achieved, it does not work from the source, and problems of long treatment time and impaired yield exist. For example, Chinese patent CN108148192A discloses that a hydrazine compound is added to a crude polyether polyol as an aldehyde catching agent in a refining process, and reacts with aldehyde substances in inert gas at a certain temperature to achieve the purpose of removing the aldehyde substances, so that the odor of the product is reduced. The patent CN108059717A discloses a refining method of a low-odor polyether polyol and application thereof, a compound antioxidant is added in the refining process, the influence of the antioxidant on the odor of a product is reduced, the purpose of reducing the odor is achieved, and reduction of odor from the source is not considered in the above description.

Therefore, a preparation method of a low-odor polyether polyol was disclosed in the patent CN109438691A of Sinopec, in the preparation method, low-aldehyde propylene oxide is utilized to produce the low-odor polyether polyol, and the specific method includes: enabling the propylene oxide to pass through a molecular sieve tank at an air speed of 20-25 h, and carrying out aldehyde reduction treatment through the molecular sieve tank to obtain low-aldehyde propylene oxide, and producing the low-odor polyether polyol by using low-aldehyde propylene oxide. Although this method can reduce the generation of odor from the source, the technological process is complicated, the treatment time is long, and the yield is seriously damaged.
CN 109575268 describes a polyether polyol refining method, comprising (1) neutralising or diluting crude polyether polyol to obtain a mixed solution; (2) flowing the mixed solution through a hydrophilic medium to aggregate same into a first density phase liquid and a second density phase liquid, the first density phase liquid being an aqueous solution containing alkaline metal ions and/or alkaline earth metal ions, and the second density phase liquid being polyether polyol; and (3) allowing the first density phase liquid to settle and separating same from the second density phase liquid to obtain refined polyether polyol. Also described is a polyether polyol refining apparatus, comprising a mixing unit and a separating unit.

### SUMMARY

Therefore, the technical problem to be solved by the present disclosure is to overcome the defects that the treatment time is long and the yield is seriously damaged when a low-odor polyether polyol is prepared by adopting a method in the prior art, and meanwhile, the odor of the polyether polyol is further reduced, so that a process and system for producing a low-odor polyether polyol are provided.

The present disclosure provides a process for producing a low-odor polyether polyol, including the following steps:
an initial polymerization reaction step, including: adding an initiator and an alkaline catalyst into a reaction container, and then inputting an epoxy olefin into the reaction container for a polymerization reaction to obtain a mixed material;
a circulation distribution polymerization step, including: taking the mixed material for outputting splitting and spraying into the reaction container at a high speed, followed by circulating the above operations while inputting the epoxy olefin and maintaining a rotation speed of 90-105 r/min for stirring the mixed material that has been sprayed into the reaction container, continuing to proceed with the polymerization reaction, and curing to obtain a crude polyether polyol; and
a refining step, including: taking the crude polyether polyol for a neutralization or dilution treatment to obtain a mixed solution of the crude polyether polyol, then aggregating a mixed solution stream by means of a hydrophilic medium, settling and separating to obtain the low-odor polyether polyol;
wherein in the circulation distribution polymerization step, a ratio of a flow rate of the mixed material sprayed into the reaction container to a volume of the reaction container is 2-5 tons/hour: 1 cubic meter.

Further, in the circulation distribution polymerization step, the ratio of the flow rate of the mixed material sprayed into the reaction container to the volume of the reaction container is 2-5 tons/hour: 1 cubic meter.

Preferably, in the initial polymerization reaction step and the circulation distribution polymerization step, the ratio of the flow rate of the epoxy olefin input into the reaction container to the volume of a reactor is 0.02-0.075 ton/hour: 1 cubic meter; and
the epoxy olefin is one or a mixture of at least two of ethylene oxide, propylene oxide and butylene oxide.

Further, in the initial polymerization reaction step and/or the circulation distribution polymerization step, a temperature of the polymerization reaction is controlled to be 110-120 °C.

The present disclosure further provides a system for producing a low-odor polyether polyol, including:
a reaction container, provided with a catalyst feeding port, an initiator feeding port, an epoxy olefin feeding port and a discharging port used for moving the mixed material out of the reaction container, wherein a stirrer is arranged in the reaction container;
a circulation distributor, located in the reaction container, and provided with a plurality of outlets, wherein the outlets of the circulation distributor communicate with an inner cavity of the reaction container, and an inlet of the circulation distributor communicates with the discharging port of the reaction container by means of a circulation pump; and
a refining system, wherein a feeding inlet of the refining system communicates with the discharging port of the reaction container by means of the circulation pump, the refining system includes a mixing unit with a mixing inner cavity and a separation unit with a separation inner cavity, and the mixing unit includes at least two sample inlets and at least one sample outlet which communicate the mixing inner cavity with the outside; the separation unit includes at least one desalter communicating with the sample outlets, and the desalter includes a first density phase outlet and a second density phase outlet which communicate the separation inner cavity with the outside, and a mixed solution inlet which is arranged in a way of keeping away from the first density phase outlet and the second density phase outlet; the mixed solution inlet communicates with the sample outlets of the mixing unit, and the second density phase outlet is located above the first density phase outlet; a sample inlet assembly connected with the mixed solution inlet as well as a separation assembly connected with the sample inlet assembly are arranged in the separation inner cavity; the separation assembly includes at least two separation pieces which are arranged in parallel and extend in the circulating direction of the mixed solution, and the sample inlet assembly is used for enabling the mixed solution to flow into the separation pieces in an equal amount; and each separation piece is provided with a circulating cavity for circulating the mixed solution, and a hydrophilic medium filled in the circulating cavity.

Further, the circulation distributor is of a spiral structure or a parallel annular structure.

Preferably, the circulation distributor further includes:
a plurality of diversion ports, wherein the circulation distributor communicates with atomizers or nozzles by means of the diversion ports.

Further, the spiral circulation distributor includes 2-3 spiral rings or annular rings in a vertical direction.

Preferably, the circulation distributor is located at one end close to the bottom or top of the reactor.

Further, the production process applies the production system according to any one of claims 4-9.

The technical solution of the present disclosure has the following advantages:
according to the process for producing the low-odor polyether polyol provided by the present disclosure, the initial polymerization reaction step, the circulation distribution polymerization step and the refining step are sequentially carried out, and the three processes exert a synergistic effect, so that the diffusion rate of the mixed material is greatly increased, the mixing uniformity is improved, the reaction rate is increased, the generation of impurities is reduced, and the generation of odor is reduced; moreover, in the circulation distribution polymerization step, through outputting, splitting and spraying, the operations are circulated, the ratio of the flow rate of the mixed material sprayed into the reaction container to the volume of the reactor is 2-5 tons/hour: 1 cubic meter, and the mixed material sprayed into the reaction container is stirred by maintaining the rotating speed of 90-105 r/min, so that the forward progress of the reaction is greatly improved, side reactions are reduced, and a crude polyether polyol with low VOC content is prepared; in combination with the refining step, namely, the crude polyether polyol is taken and subjected to neutralization or dilution treatment to obtain the mixed solution of the crude polyether polyol, then the mixed solution flows through the hydrophilic medium to be aggregated, settled and separated to obtain the low-odor polyether polyol, and the process for producing the low-odor polyether polyol has the advantages of short treatment time, high yield and low VOC content.

### BRIEF DESCRIPTION OF THE DRAWINGS

In order to more clearly illustrate the specific embodiments of the present disclosure or the technical solutions in the prior art, the drawings used in the specific embodiments or descriptions in the prior art will be briefly described below, and it is obvious that the drawings in the following description are some embodiments of the present disclosure, and other drawings can be obtained by those of ordinary skill in the art according to these drawings without creative efforts.
Fig. 1 is a structural schematic diagram of a system for producing a low-odor polyether polyol in accordance with a first embodiment of the present disclosure;
Fig. 2 is a structural schematic diagram of a refining system for the low-odor polyether polyol in accordance with the present disclosure; and
Fig. 3 is a structural schematic diagram of a system for producing a low-odor polyether polyol in accordance with a second embodiment of the present disclosure.

### Reference signs:

1-mixing unit; 11-first fluid sample inlet; 12-second fluid sample inlet; 13-mixing inner cavity; 14-sample outlet; 2-separation unit; 21-mixed solution inlet; 22-second density phase outlet; 23-first density phase outlet; 24-separation inner cavity; 25-sample inlet assembly; 26-separation assembly; 3-pressurizing unit; 4-pipeline; 5-reaction container; 51-epoxy olefin feeding port; 52-discharging port; 53-stirrer; 54-circulation pump; and 55-circulation distributor.

### DETAILED DESCRIPTION

### Embodiment 1

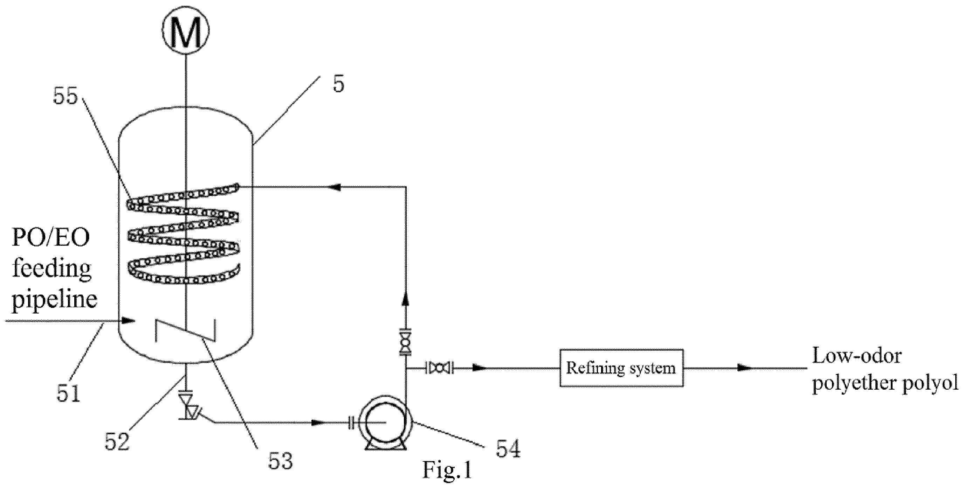

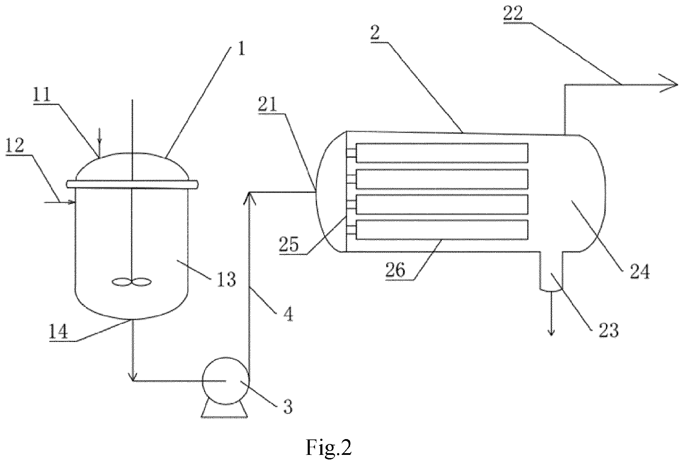

This embodiment provides a system for producing a low-odor polyether polyol, as shown in Fig. 1 and Fig. 2, the system includes a reaction container 5, a circulation distributor 55 and a refining system, the reaction container 5 is provided with a catalyst feeding port, an initiator feeding port, an epoxy olefin feeding port 51 and a discharging port 52 used for moving a mixed material out of the reaction container, and a stirrer 53 is arranged in the reaction container 5; the circulation distributor 55 is located in the reaction container 5, the circulation distributor 55 is provided with a plurality of outlets, the outlets of the circulation distributor 55 communicate with an inner cavity of the reaction container, and an inlet of the circulation distributor 55 communicates with the discharging port of the reaction container 5 by means of a circulation pump 54; and as shown in Fig. 1, the circulation pump 54 in the embodiment is provided with one inlet and two outlets, the inlet of the circulation pump 54 communicates with the discharging port of the reaction container 5 through a conveying pipe, one of the outlets extends into the reaction container 5 through a conveying pipe and communicates with the inlet of the circulation distributor 55, the other outlet communicates with the refining system through a conveying pipe, and the conveying pipe is provided with a valve control switch.

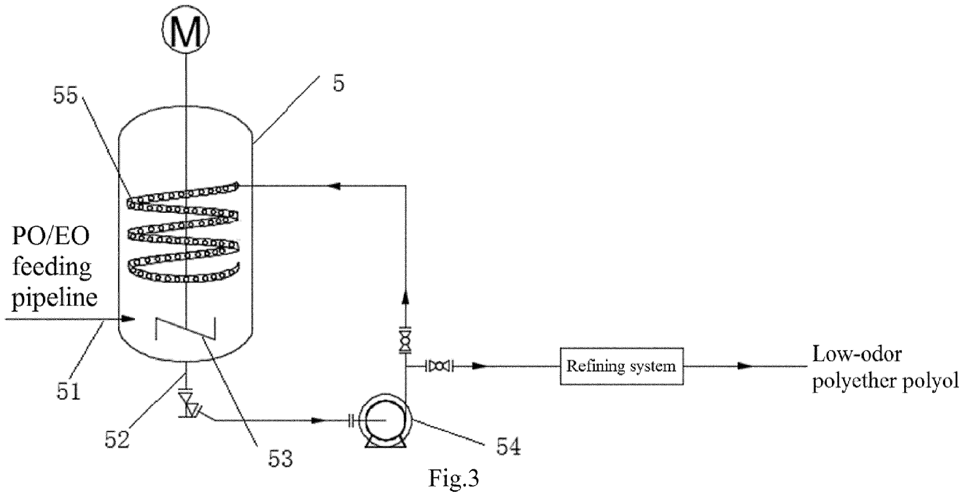

The circulation distributor 55 is of a spiral structure, a parallel annular structure or other structures (as shown in Fig. 1 and Fig. 3), the circulation distributor 55 further includes: a plurality of diversion ports, and the circulation distributor 55 communicates with atomizers or nozzles by means of the diversion ports; and the circulation distributor 55 includes 2-3 spiral rings or annular rings in a vertical direction. The circulation distributor 55 is located at the end, close to the bottom or the top, of a reactor.

During use, a valve on the conveying pipe between the circulation pump 54 and the circulation distributor 55 is opened, a valve on the conveying pipe between the circulation pump 54 and the refining system is closed, the circulation pump 54 is started, a material in the reaction container 5 is conveyed to the circulation distributor 55 through the discharging port 52 via the circulation pump 54, is sprayed out through the nozzles at the diversion ports of the circulation distributor 55, is sprayed into the reaction container 5, and is output through the circulation pump 54 via the discharging port 52 at the bottom of the reaction container 5 to achieve circulation.

The refining system includes a mixing unit 1, a pressurizing unit 3 and a separation unit 2. The pressurizing unit 3 is located on a pipeline 4 for communicating the mixing unit 1 with the separation unit 2.

The mixing unit 1 is provided with a mixing inner cavity 13 as well as two sample inlets and one sample outlet 14 which communicate the mixing inner cavity 13 with the outside. As shown in Fig. 2, the mixing unit 1 is a neutralization reactor, the two sample inlets are a first fluid sample inlet 11 formed in the vertical side wall face of the neutralization reactor and a second fluid sample inlet 12 formed in the top wall face of the neutralization reactor, and the sample outlet 14 is formed in the bottom wall face of the neutralization reactor.

The sample outlet 14 of the mixing unit 1 communicates with the pressurizing unit 3, such as a pressurizing pump, through the pipeline 4. The pressurizing pump is provided with an input end and an output end, the pipeline 4 penetrates out from the output end after penetrating into the pressurizing pump from the input end. The pipeline 4 close to the input end communicates with the mixing unit 1, and the pipeline 4 close to the output end communicates with the separation unit 2. The pressurizing pump is mounted on the pipeline 4, pressure of liquid in the pipeline 4 can be increased, and thus, a mixed solution is delivered from the mixing unit 1 to the separation unit 2.

The separation unit 2 includes a desalter communicating with the sample outlet 14 of the mixing unit 1, the desalter is provided with a separation inner cavity 24, a first density phase outlet 23, a second density phase outlet 22 and a mixed solution inlet 21, wherein the first density phase outlet 23 and the second density phase outlet 22 communicate the separation inner cavity 24 with the outside, and the mixing solution inlet 21 keeps away from the first density phase outlet 23 and the second density phase outlet 22. As shown in Fig. 2, the mixed solution inlet 21 is formed in the vertical side wall face of the desalter, the first density phase outlet 23 is formed in the bottom wall face of the desalter, and the second density phase outlet is formed in the top wall face of the desalter. The pipeline 4 communicating the neutralization reactor with the desalter penetrates out from the output end of the pressurizing pump, and then is connected to the mixed solution inlet 21 of the desalter.

A sample inlet assembly 25 and a separation assembly 26 are arranged in the separation inner cavity 24, the sample inlet assembly 25 is connected with the mixed solution inlet 21 and the separation assembly 26, as shown in Fig. 2, the separation assembly 26 includes four separation pieces arranged in parallel, and the separation pieces are tubular, and extend in the circulating direction of the mixed solution; one end of the sample inlet assembly 25 is connected with the four separation pieces, the other end of the sample inlet assembly 25 is connected with the mixed solution inlet 21, four sample inlet tubes which are in one-to-one correspondence to the separation pieces are arranged in the sample inlet assembly 25, one ends of the sample inlet tubes are connected with the tubular separation pieces, and the ends, away from the separation pieces, of the sample inlet tubes are connected with the mixed solution inlet 21. The mixed solution flowing in from the mixed solution inlet 21 flows into the sample inlet assembly 25 firstly, is uniformly split into various diversion tubes, and then correspondingly flows into the various separation pieces. By the sample inlet assembly 25, the mixed solution can flow into the various separation pieces of the separation assembly 26 in an equal amount.

Each separation piece of the separation assembly 26 is provided with a circulating cavity for circulating the mixed solution, and each circulating cavity is filled with a hydrophilic medium which is formed by glass fibers containing at least one group of hydroxyl, acylamino, amino and carboxyl, or formed by fibers of polymers, or formed by mixing the glass fibers with the fibers of polymers. For example, the hydrophilic medium is glass fibers connected with hydroxyl. The hydrophilic medium is rich in polar group, and has high adsorption affinity to water.

In the embodiment, when the refining system is used for refining the polyether polyol, an acid solution, such as a phosphoric acid solution, is introduced into the neutralization reactor through the first fluid sample inlet 11 formed in the neutralization reactor, and a crude polyether polyol is introduced into the neutralization reactor through the second fluid sample inlet 12 formed in the neutralization reactor. In the mixing inner cavity 13 of the neutralization reactor, the acid solution and the crude polyether polyol are stirred and uniformly mixed, the crude polyether polyol is subjected to neutralization treatment, a catalyst remaining in the crude polyether polyol is dissolved in water in a form of alkaline metal or alkaline-earth metal ions, and is dispersed in the polyether polyol in a form of liquid drops, so that a mixed solution containing the crude polyether polyol is obtained.

Then, the mixed solution flows out through the sample outlet 14 in the bottom of the neutralization reactor and flows to the desalter through the connecting pipeline 4. When flowing through the pressurizing pump, the mixed solution penetrates through the input end of the pressurizing pump in the pipeline 4 and then penetrates out of the output end, and the pressurizing pump pressurizes the liquid in the pipeline 4, so that the mixed solution is continuously delivered to the desalter after flowing through the pressurizing pump.

The mixed solution is delivered to the desalter through the pipeline 4 and flows into the separation inner cavity 24 of the desalter through the mixed solution inlet 21 formed in the vertical side wall face of the desalter. In the separation inner cavity 24, the mixed solution firstly flows into the sample inlet tubes of the sample inlet assembly 25 to be split, and then flows into the separation pieces communicating with the sample inlet tubes in a one-to-one correspondence manner through the sample inlet tubes in an equal amount. The mixed solution flows through the hydrophilic medium in the process of circulating in the circulating cavities of the separation pieces, and due to hydrophilicity of the hydrophilic medium, the polyether polyol in the mixed solution flows out first after flowing through the hydrophilic medium and is gathered into second density phase liquid; water phase liquid drops in the mixed solution are adsorbed on the surface of the hydrophilic medium after being in contact with the hydrophilic medium, the water phase liquid drops are continuously gathered on the surface of the hydrophilic medium along with circulating of the mixed solution, and after reaching a certain volume, the water phase liquid drops are separated from the hydrophilic medium under the action of gravity and are gathered to form first density phase liquid.

Because alkaline metal ions and/or alkaline-earth metal ions are dissolved in the first density phase liquid, the density of the first density phase liquid is greater than that of the second density phase liquid, after settling for a period of time, the first density phase liquid is gathered to a position below the second density phase liquid, and flows out of the separation inner cavity 24 through the first density phase outlet 23 formed in the bottom wall face of the desalter; and the density of the second density phase liquid is smaller, and flows out of the separation inner cavity 24 via the second density phase outlet 22 formed in the top wall face of the desalter, and meanwhile, alkaline metal ions, alkaline-earth metal ions and water in the polyether polyol are removed to obtain the refined polyether polyol.

By the refining system, catalyst metal ions and water which remain in the polyether polyol can be removed simultaneously, the step of refining the polyether polyol is simplified, and the refining efficiency of the polyether polyol is improved. The content, less than or equal to 3 ppm, of total aldehyde in the obtained polyether polyol is low, odor is small, and environmental friendliness is high. Alkaline metal ions in the polyether polyol are effectively removed, the polyether polyol can be directly used for synthesizing a polyurethane product, side reactions in a synthesizing process of the polyurethane product can be reduced, and the quality of the synthesized polyurethane product is improved.

### Embodiment 2

This embodiment provides a process for producing a low-odor polyether polyol, including the following steps:
(1) an initial polymerization reaction step: 902 kg of glycerin and 107 kg of potassium hydroxide are added into a 60m³ reactor with a stirrer, after three times of replacement of the reactor by N₂, the mixture is heated to a temperature of 110°C and then dehydration is carried out, after dehydration is completed, propylene oxide is input into the reaction container at a flow rate of 1.8 t/h (tons/hour) until the feeding amount reaches 3 t (tons), and at the temperature of 110°C, the propylene oxide is subjected to a polymerization reaction to obtain a mixed material;
(2) a circulation distribution polymerization step: when the feeding amount of the propylene oxide in the reactor reaches 3 t, the circulation pump is started, the circulation distributor communicates with the discharging port of the reactor, so that the mixed material is output through the discharging port, is split via the circulation distributor and then is sprayed into the reactor at a flow rate of 200 t/h, the above operations are circulated, meanwhile, 39.204 t of propylene oxide is continuously input into the reactor at a flow rate of 3 t/h, then 7.317 t of ethylene oxide is input at a flow rate of 1.2 t/h, the mixed material sprayed into the reaction container is stirred by maintaining a rotating speed of 105 r/min, the polymerization reaction is continued to proceed, after inputting of the ethylene oxide is completed, the circulation pump is stopped, and curing is carried out until a reaction pressure is not reduced so as to obtain a crude polyether polyol; and
(3) a refining step: the crude polyether polyol and a proper amount of 75wt% phosphoric acid solution are introduced into the neutralization reactor; stirring is conducted for 1h in the neutralization reactor, the temperature in the neutralization reactor is controlled to be 60°C, the crude polyether polyol is subjected to neutralization treatment, and potassium ions mixed in the polyether polyol are dissolved in water, and are dispersed in the polyether polyol in a manner of water phase liquid drops. After the neutralization treatment, a mixed solution containing the polyether polyol is obtained, a pH of the mixed solution is 5.5, the temperature is 60°C, and the mass fraction of water is 5%. The mixed solution is pressurized by flowing through the pressurizing pump, so that the pressure of the mixed solution is increased to be 0.5 Mpa. Then, the mixed solution is introduced into the desalter, the mixed solution flows through the hydrophilic medium in the separation pieces, and due to hydrophilicity of the medium, the polyether polyol in the mixed solution flows out firstly after flowing through the hydrophilic medium, and is gathered into the second density phase liquid; and after being in contact with the hydrophilic medium, the water phase liquid drops in the mixed solution are adsorbed to the surface of the hydrophilic medium, the water phase liquid drops are continuously gathered on the surface of the hydrophilic medium along with circulating of the mixed solution, and after a certain volume is reached, the water phase liquid drops are separated from the hydrophilic medium under the action of gravity, and are gathered to form the first density phase liquid. The first density phase liquid contains potassium ions, the density of the first density phase liquid is greater than that of the polyether polyol, after settling is conducted for 1 h, the first density phase liquid is gathered to the bottom of the desalter, the first density phase liquid is separated from the polyether polyol, the first density phase liquid and the polyether polyol are separated and are separately discharged via the first density phase outlet and the second density phase outlet of the desalter, so that a refined polyether polyol is obtained.

According to the relevant regulations of the national standard GB/T37196-2018, the content of total aldehyde of the refined polyether polyol is measured, and the measured results include that the content of total aldehyde is 0.34 ppm, wherein the content of formaldehyde is 0.34 ppm, the content of acetaldehyde is ND, the content of acrolein is ND, and the odor grade of the product is identified as grade 1.

### Embodiment 3

This embodiment provides a process for producing a low-odor polyether polyol, including the following steps:
(1) an initial polymerization reaction step: 902 kg of glycerin and 107 kg of potassium hydroxide are added into a 60m³ reactor with a stirrer, after three times of replacement of the reactor by N₂, the mixture is heated to a temperature of 120°C and then dehydration is carried out, after dehydration is completed, propylene oxide is input into the reaction container at a flow rate of 1.8 t/h (tons/hour) until the feeding amount reaches 3 t (tons), and at the temperature of 120°C, the propylene oxide is subjected to a polymerization reaction to obtain a mixed material;
(2) a circulation distribution polymerization step: when the feeding amount of the propylene oxide in the reactor reaches 3 t, the circulation pump is started, the circulation distributor communicates with the discharging port of the reactor, so that the mixed material is output through the discharging port, is split via the circulation distributor and then is sprayed into the reactor at a flow rate of 300 t/h, the above operations are circulated, meanwhile, 39.204 t of propylene oxide is continuously input into the reactor at a flow rate of 4.5 t/h, then 7.317 t of ethylene oxide is input at a flow rate of 2 t/h, the mixed material sprayed into the reaction container is stirred by maintaining a rotating speed of 90 r/min, the polymerization reaction is continued to proceed, after inputting of the ethylene oxide is completed, the circulation pump is stopped, and curing is carried out until a reaction pressure is not reduced so as to obtain a crude polyether polyol; and
(3) a refining step: the crude polyether polyol and a proper amount of 75wt% phosphoric acid solution are introduced into the neutralization reactor; stirring is conducted for 1 h in the neutralization reactor, the temperature in the neutralization reactor is controlled to be 55°C, the crude polyether polyol is subjected to neutralization treatment, and potassium ions mixed in the polyether polyol are dissolved in water, and are dispersed in the polyether polyol in a manner of water phase liquid drops. After the neutralization treatment, a mixed solution containing the polyether polyol is obtained, a pH of the mixed solution is 6, the temperature is 55°C, and the mass fraction of water is 5%. The mixed solution is pressurized by flowing through the pressurizing pump, so that the pressure of the mixed solution is increased to be 0.5 Mpa. Then, the mixed solution is introduced into the desalter, the mixed solution flows through the hydrophilic medium in the separation pieces, and due to hydrophilicity of the medium, the polyether polyol in the mixed solution flows out firstly after flowing through the hydrophilic medium, and is gathered into the second density phase liquid; and after being in contact with the hydrophilic medium, the water phase liquid drops in the mixed solution are adsorbed to the surface of the hydrophilic medium the water phase liquid drops are continuously gathered on the surface of the hydrophilic medium along with circulating of the mixed solution, and after a certain volume is reached, the water phase liquid drops are separated from the hydrophilic medium under the action of gravity, and are gathered to form the first density phase liquid. The first density phase liquid contains potassium ions, the density of the first density phase liquid is greater than that of the polyether polyol, after settling is conducted for 1 h, the first density phase liquid is gathered to the bottom of the desalter, the first density phase liquid is separated from the polyether polyol, the first density phase liquid and the polyether polyol are separated and are separately discharged via the first density phase outlet and the second density phase outlet of the desalter, so that a refined polyether polyol is obtained.

According to the relevant regulations of the national standard GB/T37196-2018, the content of total aldehyde of the refined polyether polyol is measured, and the measured results include that the content of total aldehyde is 0.31 ppm, wherein the content of formaldehyde is 0.31 ppm, the content of acetaldehyde is ND, the content of acrolein is ND and the odor grade of the product is identified as grade 1.

### Comparative Example 1

This comparative example provides a process for producing a low-odor polyether polyol, including the following steps:
(1) an initial polymerization reaction step: 902 kg of glycerin and 107 kg of potassium hydroxide are added into a 60m³ reactor with a stirrer, after three times of replacement of the reactor by N₂, the mixture is heated to a temperature of 110°C and then dehydration is carried out, after dehydration is completed, propylene oxide is input into the reaction container at a flow rate of 1.8 t/h (tons/hour) until the feeding amount reaches 3 t (tons), and at the temperature of 110°C, the propylene oxide is subjected to a polymerization reaction to obtain a mixed material;
(2) a circulation distribution polymerization step: when the feeding amount of the propylene oxide in the reactor reaches 3 t, the circulation pump is started, the circulation distributor communicates with the discharging port of the reactor, so that the mixed material is output through the discharging port, is split via the circulation distributor and then is sprayed into the reactor at a flow rate of 200 t/h, the above operations are circulated, meanwhile, 39.204 t of propylene oxide is continuously input into the reactor at a flow rate of 3 t/h, then 7.317 t of ethylene oxide is input at a flow rate of 1.2 t/h, the mixed material sprayed into the reaction container is stirred by maintaining a rotating speed of 105 r/min, the polymerization reaction is continued to proceed, after inputting of the ethylene oxide is completed, the circulation pump is stopped, and curing is carried out until a reaction pressure is not reduced so as to obtain a crude polyether polyol; and
(3) a refining step: the crude polyether polyol and a proper amount of 75wt% of phosphoric acid solution are introduced into the neutralization reactor; stirring is conducted for 1 h in the neutralization reactor, the temperature in the neutralization reactor is controlled to be 85°C, a sample is taken and detected to obtain pH being 4.8, then 40 kg of magnesium silicate and 20 kg of aluminum silicate are added, after stirring is conducted for 1 h, the temperature is increased to 110°C and dehydration is carried out under vacuum, and when the water content is less than or equal to 0.05%, the crude polyether polyol is filtered through a filter to obtain a refined polyether polyol.

According to the relevant regulations of the national standard GB/T37196-2018, the content of aldehyde of the refined polyether polyol is measured, and the measured results include that the content of formaldehyde is 0.95 ppm, the content of acetaldehyde is 0.65 ppm, and the content of acrolein is ND; and the odor grade of the product is identified as grade 3.

### Comparative example 2

This comparative example provides a process for producing a low-odor polyether polyol, including the following steps:
(1) an initial polymerization reaction step: 902 kg of glycerin and 107 kg of potassium hydroxide are added into a 60m³ reactor with a stirrer, after three times of replacement of the reactor by N₂, the mixture is heated to a temperature of 110°C and then dehydration is carried out, after dehydration is completed, propylene oxide is input into the reaction container at a flow rate of 1.8 t/h (tons/hour) until the feeding amount reaches 3 t (tons), and at the temperature of 110°C, the propylene oxide is subjected to a polymerization reaction to obtain a mixed material;
(2) a polymerization step: when the feeding amount of the propylene oxide in the reactor reaches 3 t, the circulation pump is started, a common reactor which does not communicate with the circulation distributor is directly utilized, the reactor is provided with a top inlet and a bottom outlet which separately communicate with the circulation pump, the mixed material is circulated by the circulation pump, a flow rate of the circulation pump is controlled to be 200 t/h, the above operations are circulated, meanwhile, 39.204 t of propylene oxide is continuously input into the reactor at a flow rate of 3 t/h, then 7.317 t of ethylene oxide is input at a flow rate of 1.2 t/h, the mixed material sprayed into the reaction container is stirred by maintaining a rotating speed of 105 r/min, the polymerization reaction is continued to proceed, after inputting of the ethylene oxide is completed, the circulation pump is stopped, and curing is carried out until a reaction pressure is not reduced to obtain a crude polyether polyol; and
(3) a refining step: the crude polyether polyol and a proper amount of 75wt% phosphoric acid solution are introduced into the neutralization reactor; stirring is conducted for 1 h in the neutralization reactor, the temperature of in the neutralization reactor is controlled to be 60°C, the crude polyether polyol is subjected to neutralization treatment, and potassium ions mixed in the polyether polyol are dissolved in water, and are dispersed in the polyether polyol in a manner of water phase liquid drops. After the neutralization treatment, a mixed solution containing the polyether polyol is obtained, a pH of the mixed solution is 5.5, the temperature is 60°C, and the mass fraction of water is 5%. The mixed solution is pressurized by flowing through a pressurizing pump, so that the pressure of the mixed solution is increased to be 0.5 Mpa. Then, the mixed solution is introduced into the desalter, the mixed solution flows through the hydrophilic medium in the separation pieces, and due to hydrophilicity of the medium, the polyether polyol in the mixed solution flows out firstly after flowing through the hydrophilic medium, and is gathered into the second density phase liquid; and after being in contact with the hydrophilic medium, the water phase liquid drops in the mixed solution are adsorbed to the surface of the hydrophilic medium, the water phase liquid drops are continuously gathered on the surface of the hydrophilic medium along with circulating of the mixed solution, and after a certain volume is reached, the water phase liquid drops are separated from the hydrophilic medium under the action of gravity, and are gathered to form the first density phase liquid. The first density phase liquid contains potassium ions, the density of the first density phase liquid is greater than that of the polyether polyol, after settling is conducted for 1 h, the first density phase liquid is gathered to the bottom of the desalter, the first density phase liquid is separated from the polyether polyol, the first density phase liquid and the polyether polyol are separated and are separately discharged via the first density phase outlet and the second density phase outlet of the desalter, so that a refined polyether polyol is obtained.

According to the relevant regulations of the national standard GB/T37196-2018, the content of total aldehyde of the refined polyether polyol is measured, and the measured results include that the content of total aldehyde is 1.44 ppm, wherein the content of formaldehyde is 0.91 ppm, the content of acetaldehyde is 0.53 ppm, the content of acrolein is ND, and the odor grade of the product is identified as grade 2.

### Comparative example 3

This comparative example provides a process for producing a low-odor polyether polyol, including the following steps:
(1) an initial polymerization reaction step: 902 kg of glycerin and 107 kg of potassium hydroxide are added into a 60m³ reactor with a stirrer, after three times of replacement of the reactor by N₂, the mixture is heated to a temperature of 110°C and then dehydration is carried out, after dehydration is completed, propylene oxide is input into the reaction container at a flow rate of 1.8 t/h (tons/hour) until the feeding amount reaches 3 t (tons), and at the temperature of 110°C, the propylene oxide is subjected to a polymerization reaction to obtain a mixed material;
(2) a polymerization step: when the feeding amount of the propylene oxide in the reactor reaches 3 t, the circulation pump is started, a common reactor which does not communicate with the circulation distributor is directly utilized, the reactor is provided with a top inlet and a bottom outlet which separately communicate with the circulation pump, the mixed material is circulated by the circulation pump, a flow rate of the circulation pump is controlled to be 200 t/h, the above operations are circulated, meanwhile, 39.204 t of propylene oxide is continuously input into the reactor at a flow rate of 3 t/h, then 7.317 t of ethylene oxide is input at a flow rate of 1.2 t/h, the mixed material sprayed into the reaction container is stirred by maintaining a rotating speed of 105 r/min, the polymerization reaction is continued to proceed, after inputting of the ethylene oxide is completed, the circulation pump is stopped, and curing is carried out until a reaction pressure is not reduced so as to obtain a crude polyether polyol; and
(3) a refining step: the crude polyether polyol and a proper amount of 75wt% phosphoric acid solution are introduced into the neutralization reactor; stirring is conducted for 1 h in the neutralization reactor, the temperature in the neutralization reactor is controlled to be 85°C, a sample is taken and detected to obtain pH being 4.8, then 40 kg of magnesium silicate and 20 kg of aluminum silicate are added, after stirring is conducted for 1 h, the temperature is increased to 110°C and dehydration is carried out under vacuum, and when the water content is less than or equal to 0.05%, the crude polyether polyol is filtered through a filter to obtain a refined polyether polyol.

According to the relevant regulations of the national standard GB/T37196-2018, the content of aldehyde of the refined polyether polyol is measured, and the measured results include that the content of formaldehyde is 1.23 ppm, the content of acetaldehyde is 0.89 ppm, and the content of acrolein is ND; and the odor grade of the product is identified as grade 5.

Obviously, the above embodiments are only examples for clarity of illustration and are not intended to limit the embodiments. Other variations and modifications in different forms can be made by those of ordinary skill in the art in light of the above description. It is neither necessary nor possible to exhaust all the embodiments here.

## Claims

1. A process for producing a low-odor polyether polyol, **characterized by** comprising the following steps:
an initial polymerization reaction step, comprising: adding an initiator and an alkaline catalyst into a reaction container, and then inputting an epoxy olefin into the reaction container for a polymerization reaction to obtain a mixed material;
a circulation distribution polymerization step, comprising: taking the mixed material for outputting, splitting and spraying into the reaction container at a high speed, followed by circulating the above operations while inputting the epoxy olefin and maintaining a rotation speed of 90-105 r/min for stirring the mixed material that has been sprayed into the reaction container, continuing to proceed with the polymerization reaction, and curing to obtain a crude polyether polyol; and
a refining step, comprising: taking the crude polyether polyol for a neutralization or dilution treatment to obtain a mixed solution of the crude polyether polyol, then aggregating a mixed solution stream by means of a hydrophilic medium, settling and separating to obtain the low-odor polyether polyol;
wherein in the circulation distribution polymerization step, a ratio of a flow rate of the mixed material sprayed into the reaction container to a volume of the reaction container is 2-5 tons/hour: 1 cubic meter.

2. The process for producing the low-odor polyether polyol according to claim 1, **characterized in that** in the initial polymerization reaction step and the circulation distribution polymerization step, the ratio of the flow rate of the epoxy olefin input into the reaction container to the volume of a reactor is 0.02-0.075 ton/hour: 1 cubic meter; and
the epoxy olefin is one or a mixture of at least two of ethylene oxide, propylene oxide and butylene oxide.

3. The process for producing the low-odor polyether polyol according to claim 1 or claim 2, **characterized in that** in the initial polymerization reaction step and/or the circulation distribution polymerization step, a temperature of the polymerization reaction is controlled to be 110-120°C.

4. A system for producing a low-odor polyether polyol, **characterized by** comprising:
a reaction container, provided with a catalyst feeding port, an initiator feeding port, an epoxy olefin feeding port and a discharging port used for moving the mixed material out of the reaction container, wherein a stirrer is arranged in the reaction container;
a circulation distributor, located in the reaction container, and provided with a plurality of outlets, wherein the outlets of the circulation distributor communicate with an inner cavity of the reaction container, and an inlet of the circulation distributor communicates with the discharging port of the reaction container by means of a circulation pump; and
a refining system, wherein a feeding inlet of the refining system communicates with the discharging port of the reaction container by means of the circulation pump, the refining system comprises a mixing unit with a mixing inner cavity and a separation unit with a separation inner cavity, and the mixing unit comprises at least two sample inlets and at least one sample outlet which communicate the mixing inner cavity with the outside; the separation unit comprises at least one desalter communicating with the sample outlets, and the desalter comprises a first density phase outlet and a second density phase outlet which communicate the separation inner cavity with the outside, and a mixed solution inlet which is arranged in a way of keeping away from the first density phase outlet and the second density phase outlet; the mixed solution inlet communicates with the sample outlets of the mixing unit, and the second density phase outlet is located above the first density phase outlet; a sample inlet assembly connected with the mixed solution inlet as well as a separation assembly connected with the sample inlet assembly are arranged in the separation inner cavity; the separation assembly comprises at least two separation pieces which are arranged in parallel and extend in the circulating direction of the mixed solution, and the sample inlet assembly is used for enabling the mixed solution to flow into the separation pieces in an equal amount; and each separation piece is provided with a circulating cavity for circulating the mixed solution, and a hydrophilic medium filled in the circulating cavity.

5. The system according to claim 4, **characterized in that** the circulation distributor is of a spiral structure or a parallel annular structure.

6. The system according to claim 4 or claim 5, **characterized in that** the circulation distributor also comprises: a plurality of diversion ports, and the circulation distributor communicates with atomizers or nozzles by means of the diversion ports.

7. The system according to any one of claims 4 to 6, **characterized in that** the spiral circulation distributor comprises 2-3 spiral rings or annular rings in a vertical direction.

8. The system according to any one of claims 4 to 6, **characterized in that** the circulation distributor is located at one end close to the bottom or top of the reactor.

9. The process according to any one of claims 1 to 3, **characterized in that** the process applies the system according to any one of claims 4 to 8.

## Patentansprüche

1. Verfahren zur Herstellung von geruchsarmem Polyetherpolyol, **dadurch gekennzeichnet, dass** es die folgenden Schritte umfasst:
einen anfänglichen Polymerisationsreaktionsschritt, umfassend: Hinzufügen eines Initiators und eines alkalischen Katalysators in einen Reaktionsbehälter und dann Eingeben eines Epoxidolefins in den Reaktionsbehälter für eine Polymerisationsreaktion, um ein gemischtes Material zu erhalten;
einen Zirkulationsverteilungspolymerisationsschritt, umfassend: Entnehmen des gemischten Materials zum Ausgeben, Aufteilen und Sprühen in den Reaktionsbehälter bei einer hohen Geschwindigkeit, gefolgt von Zirkulieren der obigen Vorgänge unter Eingabe des Epoxidolefins und Beibehalten einer Drehgeschwindigkeit von 90-105 U/min zum Rühren des gemischten Materials, das in den Reaktionsbehälter gesprüht worden ist, Fortsetzen der Polymerisationsreaktion und Aushärten, um ein rohes Polyetherpolyol zu erhalten; und
einen Raffinationsschritt, umfassend: Unterziehen des rohen Polyetherpolyols einer Neutralisierungs- oder Verdünnungsbehandlung, um eine gemischte Lösung des rohen Polyetherpolyols zu erhalten, dann Aggregieren eines gemischten Lösungsstroms mittels eines hydrophilen Mediums, Absetzen und Trennen, um das geruchsarme Polyetherpolyol zu erhalten;
wobei in dem Zirkulationsverteilungspolymerisationsschritt ein Verhältnis einer Durchflussrate des gemischten Materials, das in den Reaktionsbehälter gesprüht wird, zu einem Volumen des Reaktionsbehälters 2-5 Tonnen/Stunde: 1 Kubikmeter ist.

2. Verfahren zur Herstellung des geruchsarmen Polyetherpolyols nach Anspruch 1, **dadurch gekennzeichnet, dass** in dem anfänglichen Polymerisationsreaktionsschritt und dem Zirkulationsverteilungspolymerisationsschritt das Verhältnis der Durchflussrate des Epoxidolefins, das in den Reaktionsbehälter eingegeben wird, zu dem Volumen eines Reaktors 0,02-0,075 Tonnen/Stunde: 1 Kubikmeter ist; und
das Epoxidolefin eines oder eine Mischung aus zumindest zwei von Ethylenoxid, Propylenoxid und Butylenoxid ist.

3. Verfahren zur Herstellung des geruchsarmen Polyetherpolyols nach Anspruch 1 oder Anspruch 2, **dadurch gekennzeichnet, dass** in dem anfänglichen Polymerisationsreaktionsschritt und/oder dem Zirkulationsverteilungspolymerisationsschritt eine Temperatur der Polymerisationsreaktion auf 110-120 °C gesteuert wird.

4. System zur Herstellung eines geruchsarmen Polyetherpolyols, **dadurch gekennzeichnet, dass** es Folgendes umfasst:
einen Reaktionsbehälter, bereitgestellt mit einer Katalysatorzufuhröffnung, einer Initiatorzufuhröffnung, einer Epoxidolefin-Zufuhröffnung und einer Auslassöffnung, die verwendet wird, um das gemischte Material aus dem Reaktionsbehälter zu bewegen, wobei ein Rührer in dem Reaktionsbehälter angeordnet ist;
einen Zirkulationsverteiler, der sich in dem Reaktionsbehälter befindet und mit einer Vielzahl von Auslässen bereitgestellt ist, wobei die Auslässe des Zirkulationsverteilers mit einem Innenhohlraum des Reaktionsbehälters kommunizieren und ein Einlass des Zirkulationsverteilers mit der Auslassöffnung des Reaktionsbehälters mittels einer Zirkulationspumpe kommuniziert; und
ein Raffinierungssystem, wobei ein Zufuhreinlass des Raffinierungssystems mit der Auslassöffnung des Reaktionsbehälters mittels der Umwälzpumpe kommuniziert, das Raffinierungssystem eine Mischeinheit mit einem Mischinnenhohlraum und eine Trenneinheit mit einem Trenninnenhohlraum umfasst, und die Mischeinheit zumindest zwei Probeneinlässe und zumindest einen Probenauslass umfasst, die den Mischinnenhohlraum mit der Außenseite kommunizieren; die Trenneinheit zumindest einen Entsalzer umfasst, der mit den Probenauslässen kommuniziert, und der Entsalzer einen ersten Dichtephasenauslass und einen zweiten Dichtephasenauslass, die den Trenninnenhohlraum mit der Außenseite kommunizieren, und einen gemischten Lösungseinlass, der auf eine Weise angeordnet ist, dass er weg von dem ersten Dichtephasenauslass und dem zweiten Dichtephasenauslass gehalten wird, umfasst; der gemischte Lösungseinlass mit den Probenauslässen der Mischeinheit kommuniziert, und sich der zweite Dichtephasenauslass über dem ersten Dichtephasenauslass befindet; eine Probeneinlassanordnung, die mit dem gemischten Lösungseinlass verbunden ist sowie eine Trennanordnung, die mit der Probeneinlassanordnung verbunden ist, in dem Trenninnenhohlraum angeordnet sind; die Trennanordnung zumindest zwei Trennstücke umfasst, die parallel angeordnet sind und sich in der Zirkulationsrichtung der gemischten Lösung erstrecken, und die Probeneinlassanordnung verwendet wird, um der gemischten Lösung zu ermöglichen, in die Trennstücke in einer gleichmäßigen Menge zu fließen; und jedes Trennstück mit einem Zirkulationshohlraum zum Zirkulieren der gemischten Lösung und einem hydrophilen Medium, das in den Zirkulationshohlraum gefüllt ist, bereitgestellt ist.

5. System nach Anspruch 4, **dadurch gekennzeichnet, dass** der Zirkulationsverteiler von einer Spiralstruktur oder einer parallelen Ringstruktur ist.

6. System nach Anspruch 4 oder Anspruch 5, **dadurch gekennzeichnet, dass** der Zirkulationsverteiler auch Folgendes umfasst: eine Vielzahl von Umleitungsöffnungen, und dass der Zirkulationsverteiler mit Zerstäubern oder Düsen mittels der Umleitungsöffnungen kommuniziert.

7. System nach einem der Ansprüche 4 bis 6, **dadurch gekennzeichnet, dass** der Spiralzirkulationsverteiler 2-3 Spiralringe oder Kreisringe in einer vertikalen Richtung umfasst.

8. System nach einem der Ansprüche 4 bis 6, **dadurch gekennzeichnet, dass** sich der Zirkulationsverteiler an einem Ende nahe dem Boden oder der Oberseite des Reaktors befindet.

9. Verfahren nach einem der Ansprüche 1 bis 3, **dadurch gekennzeichnet, dass** das Verfahren das System nach einem der Ansprüche 4 bis 8 anwendet.

## Revendications

1. Procédé permettant la production d'un polyol de polyéther peu odorant, **caractérisé en ce qu'**il comprend les étapes suivantes :
une étape de réaction de polymérisation initiale, comprenant : l'ajout d'un initiateur et d'un catalyseur alcalin dans un récipient de réaction, puis l'introduction d'une époxy-oléfine dans le récipient de réaction pour une réaction de polymérisation afin d'obtenir un matériau mélangé ;
une étape de polymérisation par distribution de circulation, comprenant : la prise du matériau mélangé pour sortie, la séparation et pulvérisation dans le récipient de réaction à une vitesse élevée, suivie de la circulation des opérations ci-dessus tout en introduisant l'époxy- oléfine et en maintenant une vitesse de rotation de 90 à 105 tr/min pour agiter le matériau mélangé qui a été pulvérisé dans le récipient de réaction, la poursuite de la réalisation de la réaction de polymérisation et le durcissement pour obtenir un polyol de polyéther brut ; et
une étape de raffinage, comprenant : la prise du polyol de polyéther brut pour un traitement de neutralisation ou de dilution pour obtenir une solution mélangée du polyol de polyéther brut, puis l'agrégation d'un flux de solution mélangée au moyen d'un milieu hydrophile, la décantation et la séparation pour obtenir le polyol de polyéther peu odorant ;
dans lequel, dans l'étape de polymérisation par distribution de circulation, un rapport entre un débit du matériau mélangé pulvérisé dans le récipient de réaction et un volume du récipient de réaction est de 2 à 5 tonnes/heure : 1 mètre cube.

2. Procédé permettant la production du polyol de polyéther peu odorant selon la revendication 1, **caractérisé en ce que** dans l'étape de réaction de polymérisation initiale et l'étape de polymérisation par distribution de circulation, le rapport entre le débit de l'époxy-oléfine introduite dans le récipient de réaction et le volume d'un réacteur est de 0,02 à 0,075 tonne/heure : 1 mètre cube ; et
l'époxy-oléfine est l'un ou un mélange d'au moins deux parmi l'oxyde d'éthylène, l'oxyde de propylène et l'oxyde de butylène.

3. Procédé permettant la production du polyol de polyéther peu odorant selon la revendication 1 ou la revendication 2, **caractérisé en ce que** dans l'étape de réaction de polymérisation initiale et/ou l'étape de polymérisation par distribution de circulation, une température de la réaction de polymérisation est régulée pour être de 110 à 120° C.

4. Système permettant la production d'un polyol de polyéther peu odorant, **caractérisé en ce qu'**il comprend :
un récipient de réaction, pourvu d'un orifice d'alimentation en catalyseur, d'un orifice d'alimentation en initiateur, d'un orifice d'alimentation en époxy-oléfine et d'un orifice de décharge utilisé pour déplacer le matériau mélangé hors du récipient de réaction, dans lequel un agitateur est disposé dans le récipient de réaction ;
un distributeur de circulation, situé dans le récipient de réaction, et pourvu d'une pluralité de sorties, dans lequel les sorties du distributeur de circulation communiquent avec une cavité interne du récipient de réaction, et une entrée du distributeur de circulation communique avec l'orifice de décharge du récipient de réaction au moyen d'une pompe de circulation ; et
un système de raffinage, dans lequel une entrée d'alimentation du système de raffinage communique avec l'orifice de décharge du récipient de réaction au moyen de la pompe de circulation, le système de raffinage comprend une unité de mélange avec une cavité interne de mélange et une unité de séparation avec une cavité interne de séparation, et l'unité de mélange comprend au moins deux entrées d'échantillon et au moins une sortie d'échantillon qui font communiquer la cavité interne de mélange avec l'extérieur ; l'unité de séparation comprend au moins un dessaleur communiquant avec les sorties d'échantillon, et le dessaleur comprend une première sortie de phase de densité et une seconde sortie de phase de densité qui font communiquer la cavité interne de séparation avec l'extérieur, et une entrée de solution mélangée qui est disposée de manière à rester à l'écart de la première sortie de phase de densité et de la seconde sortie de phase de densité ; l'entrée de solution mélangée communique avec les sorties d'échantillon de l'unité de mélange, et la seconde sortie de phase de densité est située au-dessus de la première sortie de phase de densité ; un ensemble d'entrée d'échantillon raccordé à l'entrée de solution mélangée ainsi qu'un ensemble de séparation raccordé à l'ensemble d'entrée d'échantillon sont disposés dans la cavité interne de séparation ; l'ensemble de séparation comprend au moins deux parties de séparation qui sont disposées en parallèle et s'étendent dans la direction de circulation de la solution mélangée, et l'ensemble d'entrée d'échantillon est utilisé pour permettre à la solution mélangée de s'écouler dans les parties de séparation en quantité égale ; et chaque partie de séparation est pourvue d'une cavité de circulation pour faire circuler la solution mélangée, et un milieu hydrophile remplissant la cavité de circulation.

5. Système selon la revendication 4, **caractérisé en ce que** le distributeur de circulation est d'une structure en spirale ou d'une structure annulaire parallèle.

6. Système selon la revendication 4 ou la revendication 5, **caractérisé en ce que** le distributeur de circulation comprend également : une pluralité d'orifices de dérivation, et le distributeur de circulation communique avec des atomiseurs ou des buses au moyen des orifices de dérivation.

7. Système selon l'une quelconque des revendications 4 à 6, **caractérisé en ce que** le distributeur à circulation en spirale comprend 2 à 3 anneaux en spirale ou anneaux annulaires dans une direction verticale.

8. Système selon l'une quelconque des revendications 4 à 6, **caractérisé en ce que** le distributeur de circulation est situé à une extrémité proche du bas ou du haut du réacteur.

9. Procédé selon l'une quelconque des revendications 1 à 3, **caractérisé en ce que** le procédé met en oeuvre le système selon l'une quelconque des revendications 4 à 8.
